# EUROPÄISCHE PATENTSCHRIFT

(11) **EP 1 260 260 B1**
(45) Veröffentlichungstag und Bekanntmachung des Hinweises auf die Patenterteilung: **20.07.2005**
(21) Anmeldenummer: 02010812.2
(22) Anmeldetag: 15.05.2002
(51) Int. Cl.: B01D 29/21, B01D 36/04, B04B 5/00

(54) **Vorrichtung zum Abtrennen von Verunreinigungen aus einem Schmieröl einer Brennkraftmaschine**
Apparatus for the separation of impurities from the lubricating oil of an internal combustion engine
Dispositif de séparation d'impuretés de l'huile lubrificante d'un moteur à combustion interne

(30) Priorität: 19.05.2001 DE 10124463
(43) Veröffentlichungstag der Anmeldung: 27.11.2002
(73) Patentinhaber: MAHLE Filtersysteme GmbH, 70376 Stuttgart (DE)
(72) Erfinder: Brieden, Thomas c/o MAHLE Filtersysteme GmbH, 70376 Stuttgart (DE); Bauer, Swen-Juri, 70375 Stuttgart (DE); Müller, Hubert, 70327 Stuttgart (DE)
(74) Vertreter: Patentanwalts-Partnerschaft, Rotermund + Pfusch + Bernhard

(56) Entgegenhaltungen:
- EP-A- 0 376 443
- DE-U- 9 320 936
- GB-A- 1 604 832
- US-A- 4 094 791
- US-A- 5 312 546
- US-A- 5 589 060
- US-A- 5 766 463
- PATENT ABSTRACTS OF JAPAN vol. 1998, no. 08, 30. Juni 1998 (1998-06-30) & JP 10 071306 A (TENETSUKUSU:KK), 17. März 1998 (1998-03-17)
- PATENT ABSTRACTS OF JAPAN vol. 1999, no. 10, 31. August 1999 (1999-08-31) & JP 11 137917 A (TOKYO ROKI CO LTD), 25. Mai 1999 (1999-05-25)

## Beschreibung

Die Erfindung betrifft eine Vorrichtung zum Abtrennen von Verunreinigungen aus einem Schmieröl einer Brennkraftmaschine, insbesondere eines Kraftfahrzeugs, mit den Merkmalen des Oberbegriffs des Anspruchs 1.

Aus der DE 43 06 431 C2 ist eine derartige Vorrichtung bekannt, die ein Gehäuse aufweist, das durch einen Deckel verschließbar ist und in dem ein Ringfilterelement sowie eine dazu koaxial angeordnete Zentrifuge angeordnet sind. An einem Gehäuseboden ist ein zentrischer Stutzen ausgebildet, auf den das Ringfilterelement einenends außen aufgesteckt ist. Anderenends ist das Ringfilterelement auf einen weiteren Stutzen außen aufgesteckt, der an einer Zwischenwand ausgebildet ist. Diese Zwischenwand trennt im Gehäuse einen Filterraum, in dem das Ringfilterelement angeordnet ist, von einem Zentrifugenraum, in dem die Zentrifuge angeordnet ist. Innerhalb des Filterraums trennt das Ringfilterelement eine radial außen liegende Rohseite von einer radial innen liegenden Reinseite. Der am Gehäuseboden ausgebildete Stutzen kommuniziert einerseits mit der Reinseite des Ringfilterelements und andererseits mit einem reinseitigen Ablauf. Die Zwischenwand weist eine Durchtrittsöffnung auf, durch welche ein Einlaß der Zentrifuge mit der Reinseite des Ringfilterelements kommuniziert. Der Zentrifugenraum kommuniziert mit einem relativ drucklosen Rücklauf. Des weiteren kommuniziert die Rohseite im Filterraum mit einem rohseitigen Zulauf.

Bei der bekannten Vorrichtung kann eine wirksame Abdichtung zwischen der Rohseite des Ringfilterelements, in der ein relativ hoher Schmieröldruck herrschen kann, und dem im wesentlichen drucklosen Zentrifugenraum nur mit einem relativ großen Aufwand erzielt werden.

Die vorliegende Erfindung beschäftigt sich mit dem Problem, für eine Vorrichtung der eingangs genannten Art eine Ausführungsform anzugeben, bei welcher der Aufwand zur Abdichtung eines Bereichs mit relativ hohem Druck gegenüber einem Bereich mit relativ niedrigem Druck vereinfacht ist.

Dieses Problem wird erfindungsgemäß durch eine Vorrichtung mit den Merkmalen des Anspruchs 1 gelöst.

Die Erfindung beruht auf dem allgemeinen Gedanken, im Gehäuse einen zentralen Rohrkörper anzuordnen, der so in den Stutzen eingesteckt ist, daß radial zwischen dem Stutzen und dem Rohrkörper ein Ringraum ausgebildet ist, der einerseits mit der Reinseite des Ringfilterelements und andererseits durch einen im Stutzen ausgebildeten, radialen Durchbruch mit dem Ablauf kommuniziert. Ein Innenraum des Rohrkörpers kommuniziert dann durch eine zentrale Öffnung des Stutzens mit dem Rücklauf. Auf diese Weise kann die Ölführung so gelegt werden, daß an keiner Stelle die Rohseite direkt gegenüber dem Rücklauf abgedichtet werden muß. Vielmehr kann die Ölführung so gelegt werden, daß lediglich die Reinseite gegenüber dem Rücklauf abgedichtet werden muß, die jedoch einen geringeren Öldruck aufweist als die Rohseite, da bei der Durchströmung des Ringfilterelements regelmäßig ein Druckabfall stattfindet. Insofern vereinfacht sich die Abdichtung innerhalb der erfindungsgemäßen Vorrichtung.

Bei einer bevorzugten Ausführungsform können im Gehäuse zwei Ringfilterelemente koaxial übereinander angeordnet sein, wobei das gehäusebodennahe Ringfilterelement als Hauptstromfilter zum Abtrennen relativ grober Verunreinigungen und das gehäusebodenferne Ringfilterelement als Nebenstromfilter zum Abtrennen relativ feiner Verunreinigungen ausgebildet ist, wobei die Reinseite des Nebenstromfilters durch eine im Rohrkörper ausgebildete Verbindungsöffnung mit dem Innenraum des Rohrkörpers kommuniziert. Bei dieser Bauweise werden Hauptstromfilter und Nebenstromfilter parallel vom Schmieröl beaufschlagt, wodurch am Nebenstromfilter eine besonders große Druckdifferenz aufgebaut werden kann, da die Reinseite des Nebenstromfilters mit dem relativ drucklosen Rücklauf verbunden ist. Diese Bauweise unterstützt somit die ordnungsgemäße Funktion des Nebenstromfilters.

Bei einer anderen Ausführungsform kann im Gehäuse ein einziges Ringfilterelement untergebracht sein, wobei Verschlußmittel vorgesehen sind, die eine am Rohrkörper ausgebildete Verbindungsöffnung, durch die eine Umgebung des Rohrkörpers mit dem Innenraum des Rohrkörpers kommuniziert, und/oder ein am Rohrkörper ausgebildeter Verbindungskanal, durch den die Reinseite des Ringfilterelements mit der Umgebung des Rohrkörpers kommuniziert, verschließen. Eine derartige Verbindungsöffnung bzw. ein derartiger Verbindungskanal können bei bestimmten Ausführungsformen von Vorteil sein, die jedoch im Filterbetrieb mit nur einem einzigen Ringfilterelement nicht benötigt werden. Die erfindungsgemäß vorgesehenen Verschlußmittel deaktivieren somit die in dieser Anwendungsform unnötige Verbindungsöffnung bzw. den in dieser Anwendungsform unnötigen Verbindungskanal. Diese Bauweise ist im Hinblick auf eine vielfältige Einsetzbarkeit der Vorrichtung mit unterschiedlichen Ausführungsformen von Vorteil, da einzelne Standardteile, z.B. der Rohrkörper, mit besonders hohen Stückzahlen herstellbar sind.

Bei einer anderen Ausführungsform kann im Gehäuse koaxial zum Ringfilterelement eine mittels durchströmenden Schmieröls antreibbare Zentrifuge untergebracht sein, wobei der Rohrkörper an seinem vom Gehäuseboden abgewandten Ende als Funktionsträgerabschnitt ausgebildet ist, der eine Ringscheibe aufweist oder trägt, die im Gehäuse einen Zentrifugenraum axial von einem Filterraum trennt. Die Zentrifuge ist im Zentrifugenraum einenends am oder im Deckel und anderenends am oder im Funktionsträgerabschnitt gelagert.

Der Funktionsträgerabschnitt weist eine Verbindungsöffnung auf, durch die der Zentrifugenraum mit dem Innenraum des Rohrkörpers kommuniziert. Ebenso besitzt der Funktionsträgerabschnitt einen Verbindungskanal, der einen zentralen Einlaß der Zentrifuge mit dem Filterraum auf der Rohseite des Ringfilterelements verbindet. Bei dieser Bauweise sind Zentrifuge und Ringfilterelement parallel geschaltet, wobei die Reinseite des Ringfilterelements mit dem zu den Schmierstellen der Brennkraftmaschine führenden Ablauf verbunden ist, während die Auslaßseite der Zentrifuge mit dem Rücklauf verbunden ist, der zu einem relativ drucklosen Ölreservoir, z.B. Ölwanne, führt. Diese Merkmalskombination führt dazu, daß sich der am Ringfilterelement ausbildende Druckabfall zwischen Rohseite und Reinseite nicht auf die Zentrifuge auswirkt, so daß an der Zentrifuge der volle rohseitige Druck anliegt. Dementsprechend kann die Zentrifuge bereits bei niedrigen Öltemperaturen, bei denen das Schmieröl relativ zähflüssig ist, in Rotation versetzt werden, um seine Reinigungsfunktion zu erfüllen. Der zentrale Rohrkörper, durch den der Rücklauf erfolgt, hat außerdem zur Folge, daß das Ringfilterelement in radialer Richtung relativ groß bauen kann, wodurch dessen Leistungsfähigkeit erhöht wird und sich eine optimale Bauraumausnutzung ergibt.

Das der Erfindung zugrundeliegende Problem wird auch durch ein Modulsystem mit den Merkmalen des Anspruchs 16 gelöst, wobei durch gleiche Gehäuse und/oder gleiche Rohrkörper bei verschiedenen Ausführungsformen die Herstellungskosten reduziert werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: einen Längsschnitt durch eine erfindungsgemäße Vorrichtung bei einer ersten Ausführungsform,
- Fig. 2: eine Ansicht wie in Fig. 1, jedoch bei einer zweiten Ausführungsform,
- Fig. 3: eine Ansicht wie in Fig. 1, jedoch bei einer dritten Ausführungsform,
- Fig. 4: eine Ansicht wie in Fig. 1, jedoch bei einer vierten Ausführungsform.

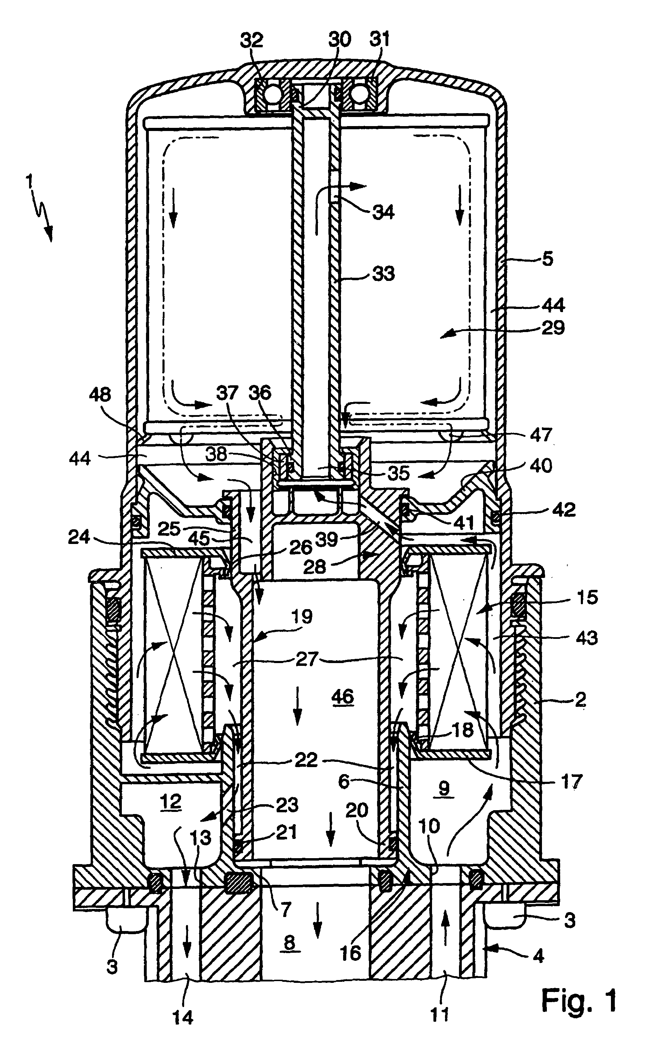

Entsprechend den Fig. 1 bis 4 weist eine erfindungsgemäße Vorrichtung 1 ein Gehäuse 2 auf, das beispielsweise mittels Schrauben 3 an einem Motorblock 4 einer im übrigen nicht dargestellten Brennkraftmaschine, insbesondere eines Kraftfahrzeugs, vorzugsweise eines Personenkraftwagens befestigt ist. Das Gehäuse 2 ist mit einem topfförmigen Deckel 5 verschließbar.

Im Gehäuse 2 ist an einem Gehäuseboden 16 ein zylindrischer Stutzen 6 ausgebildet, der eine zentrale Öffnung 7 besitzt, die mit einem relativ drucklosen Rücklauf 8 im Motorblock 4 kommuniziert. Der Rücklauf 8 führt zu einem nicht gezeigten, relativ drucklosen Schmierölreservoir, das üblicherweise durch eine Ölwanne gebildet ist. Das Gehäuse 2 enthält einen Zulaufraum 9, der über wenigstens eine Zulauföffnung 10 mit einem Zulauf 11 im Motorblock 4 kommuniziert. Dieser Zulauf 11 ist üblicherweise mit der Druckseite einer nicht gezeigten Schmierölpumpe verbunden. Des weiteren besitzt das Gehäuse 2 einen Ablaufraum 12, der über wenigstens eine Ablauföffnung 13 mit einem Ablauf 14 im Motorblock 4 kommuniziert. Der Ablauf 14 führt zu nicht gezeigten Schmierstellen der Brennkraftmaschine.

Im Gehäuse ist bei allen gezeigten Ausführungsformen wenigstens ein Ringfilterelement 15 untergebracht, das mit seinem, dem Gehäuseboden 16 zugewandten Ende 17 außen auf den Stutzen 6 aufgesteckt ist, wobei eine radial wirkende Dichtung 18 die radial außenliegende Rohrseite gegenüber der radial innenliegenden Reinseite dichtet.

Die gezeigten Ausführungsformen der Fig. 1 bis 4 weisen außerdem jeweils einen zentral im Gehäuse 2 angeordneten Rohrkörper 19 auf, der beispielsweise zylindrisch ausgebildet ist und mit seinem, dem Gehäuseboden 16 zugewandten Ende 20 innen in den Stutzen 6 eingesteckt ist. Zur Abdichtung sind radial wirkende Dichtmittel 21 vorgesehen. Der Rohrkörper 19 ist so dimensioniert, daß sich radial zwischen Rohrkörper 19 und Stutzen 6 ein erster Ringraum 22 ausbildet, der über wenigstens einen, im Stutzen 6 ausgebildeten, radialen Durchbruch 23 mit dem Ablaufraum 12 des Gehäuses 2 kommuniziert.

Das Ringfilterelement 15 ist mit seinem vom Gehäuseboden 16 abgewandten Ende 24 auf einen ebenfalls vom Gehäuseboden 16 abgewandten Endabschnitt 25 des Rohrkörpers 19 außen aufgesteckt, wobei entsprechende Dichtmittel 26 zur Abdichtung der Rohseite gegenüber der Reinseite vorgesehen sind. Dementsprechend ist radial zwischen dem Rohrkörper 19 und dem Ringfilterelement 15 ein zweiter Ringraum 27 ausgebildet, der die Reinseite des Ringfilterelements 15 bildet und mit dem ersten Ringraum 22 kommuniziert. Dementsprechend ergibt sich folgender Strömungspfad: Das Schmieröl strömt vom Zulauf 11, durch die Zulauföffnung 10, in den Zulaufraum 9, durch das Ringfilterelement 15, in den zweiten Ringraum 27, in den ersten Ringraum 22, durch den Durchbruch 23, in den Ablaufraum 12, durch die Ablauföffnung 13, in den Ablauf 14.

Die erfindungsgemäße Bauweise ermöglicht daher insbesondere bei axialer Anordnung von Zulauf 11, Ablauf 14 und Rücklauf 8 am Gehäuseboden 16 einen besonders kompakten Aufbau.

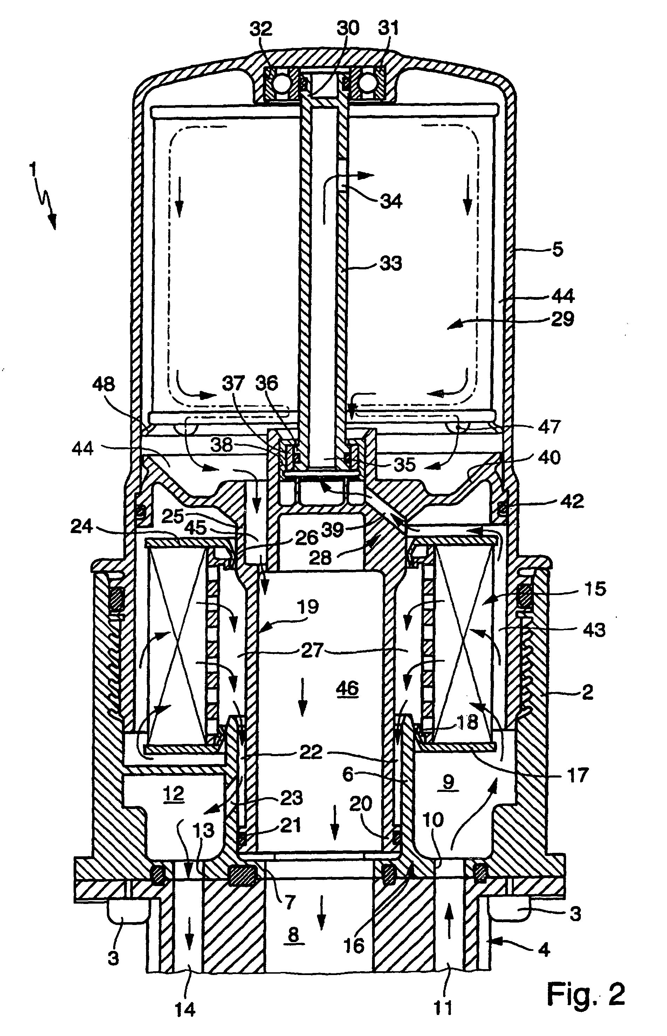

Entsprechend den Fig. 1 und 2 ist der Rohrkörper 19 an seinem vom Gehäuseboden 16 abgewandten Ende als Funktionsträgerabschnitt 28 ausgebildet. Bei dieser Ausführungsform enthält das Gehäuse 2 koaxial zum Ringfilterelement 15 eine Zentrifuge 29, die mittels des sie durchströmenden Schmieröls nach dem Rückstoßprinzip antreibbar ist. Die Zentrifuge 29 ist an einem vom Gehäuseboden 16 abgewandten Ende 30 im Deckel 5 gelagert. Zu diesem Zweck ist im Deckel 5 ein Radiallager 31 in einer Aufnahme 32 gehaltert. Eine Welle 33 der Zentrifuge 29 ist dabei axial schwimmend im Radiallager 31 gehaltert. Die Welle 33 ist hohl ausgebildet und bildet an einem offenen Ende gleichzeitig einen Einlaß 35 für das die Zentrifuge 29 antreibende Schmieröl. Dabei ist wenigstens eine radiale Überströmöffnung 34 vorgesehen, durch die das Schmieröl aus der Welle 33 in den Bereich der Zentrifuge 29 gelangt, in dem die hohen Zentrifugalkräfte wirken.

Die Zentrifuge 29 bzw. deren Welle 33 ist mit dem dem Gehäuseboden 16 zugewandten Ende 36 im Funktionsträgerabschnitt 28 des Rohrkörpers 19 gelagert, wobei hier ein radiales Gleitlager 37 vorgesehen ist, das in einer Aufnahme 38 des Funktionsträgerabschnitts 28 gehaltert ist und in dem die Welle 33 axial schwimmend und abgedichtet aufgenommen ist.

Die Aufnahme 38 bildet dabei einen Bestandteil eines Verbindungskanals 39, der im Funktionsträgerabschnitt 28 ausgebildet ist und der die Rohseite des Ringfilterelements 15, also den Zulauf 11 mit dem zentralen Einlaß 35 der Zentrifuge 29 verbindet.

Der Funktionsträgerabschnitt 28 weist eine Ringscheibe 40 auf. Bei der Ausführungsform gemäß Fig. 1 ist diese Ringscheibe 40 auf den Funktionsträgerabschnitt 28 außen aufgesteckt. Die Ringscheibe 40 liegt radial innen dicht am Funktionsträgerabschnitt 28 und radial außen dicht am Deckel 5 an. Entsprechende Dichtmittel sind mit 41 bzw. 42 bezeichnet. Diese Ringscheibe 40 trennt im Gehäuse 2 einen entsprechend Fig. 1 und 2 unten liegenden Filterraum 43, in dem das Ringfilterelement 15 untergebracht ist, von einem entsprechend Fig. 1 und 2 oben liegenden Zentrifugenraum 44, in dem die Zentrifuge 29 untergebracht ist. Mit Hilfe dieser Ringscheibe 40 wird somit die Rohölseite, in der im Betrieb der Vorrichtung 1 ein relativ hoher Öldruck herrscht, von der relativ drucklosen Rücklaufseite dicht getrennt, um Fehlströmungen und Leckagen zu vermeiden.

Der Funktionsträgerabschnitt 28 besitzt wenigstens eine Verbindungsöffnung 45, durch die der Zentrifugenraum 44 mit einem Innenraum 46 des Rohrkörpers 19 kommuniziert. Auf diese Weise herrscht im Zentrifugenraum 44 automatisch derselbe Druck wie im Rücklauf 8. Das im Betrieb der Zentrifuge 29 durch tangential orientierte Auslaßöffnungen 47 austretende Schmieröl kann somit durch die Verbindungsöffnung 45 vom Zentrifugenraum 44 in den Innenraum 46 gelangen und von diesem durch die zentrale Öffnung 7 in den Rücklauf 8.

Bei einer zweckmäßigen Weiterbildung enthält der Verbindungskanal 39 eine Drosselstelle bzw. ist der Verbindungskanal 39 als Drosselstelle ausgebildet, durch die im Nennbetrieb der Vorrichtung 1 eine gewünschte Aufteilung zwischen einem durch das Ringfilterelement 15 hindurchströmenden Hauptstrom und einem durch die Zentrifuge 29 hindurchströmenden Nebenstrom erreicht wird. Beispielsweise sollen etwa 10 % der Gesamtschmierölmenge durch die Zentrifuge 29 strömen.

Die Zentrifuge 29 weist an ihrer dem Gehäuseboden 16 zugewandten Seite eine radial außen liegende Lippe 48 auf, die vorzugsweise so dimensioniert ist, daß sie ein relativ kleines radiales Spiel zum Deckel 5 besitzt. Diese Lippe 48 verhindert so das Aufsteigen von Ölschaum.

Durch den zentralen Rücklauf 8 in Verbindung mit dem zentralen Rohrkörper 19 kann der im Gehäuse 2 zur Verfügung stehende Bauraum dahingehend ausgenutzt werden, daß das Ringfilterelement 15 einen relativ großen Durchmesser aufweist und somit eine relativ große Filterfläche bereitstellt, um die Leistungsfähigkeit des Ringfilterelements 15 zu verbessern.

Während das Ringfilterelement 15 vorwiegend dazu dient, relativ grobe Verunreinigungen aus dem Schmieröl herauszufiltern, eignet sich die Zentrifuge 29 dazu, relativ feine Verunreinigungen aus dem Schmieröl herauszufiltern, wie z.B. Rußpartikel, die beispielsweise durch eine Abgasrückführung ins Schmieröl gelangen können.

Bei den in den Fig. 1 und 2 gezeigten speziellen Ausführungsformen sind die Zentrifuge 29, das Ringfilterelement 15, die Ringscheibe 40 (bei Fig. 1), der Deckel 5 und der Rohrkörper 19 lösbar miteinander verbunden und bilden eine gemeinsam aus dem Gehäuse 2 entnehmbare Einheit. Das bedeutet, beim Abnehmen des Deckels 5 wird die komplette Einheit vom Gehäuse 2 entfernt. Dabei wird beispielsweise der Rohrkörper 19 beim Abschrauben des Deckels 5 aus dem Stutzen 6 herausgezogen, wobei der Rücklauf 8 als Leerlauf funktioniert und dadurch die Wartung der Vorrichtung 1 vereinfacht.

Während bei Fig. 1 die Ringscheibe 40 als separates Bauteil ausgebildet ist, kann diese bei der Ausführungsform gemäß Fig. 2 auch einteilig am Funktionsträgerabschnitt 28 ausgebildet sein, so daß die radial innenliegende Dichtung 41 entfallen kann.

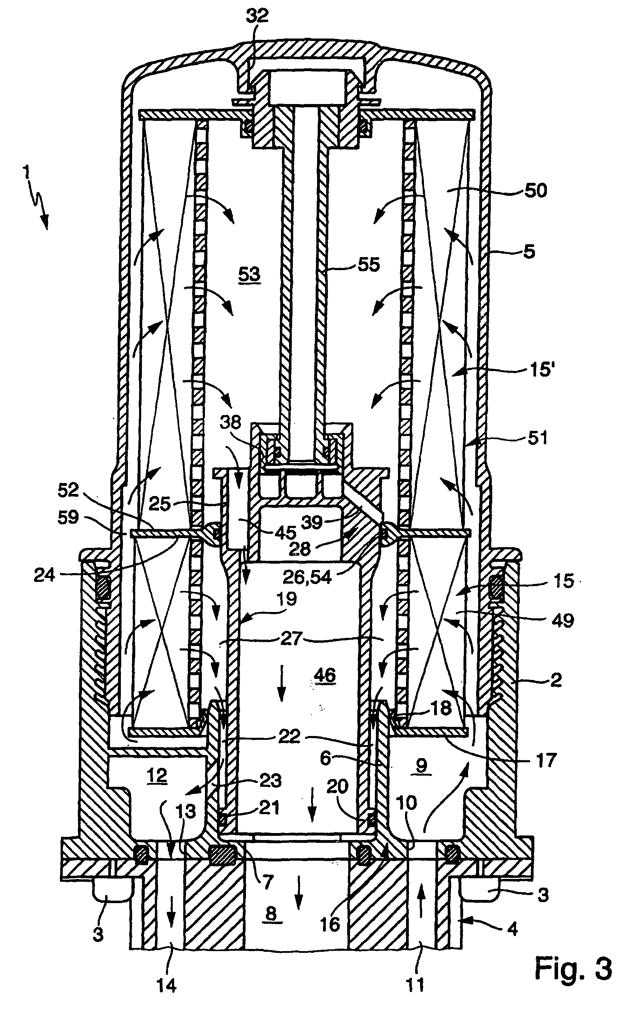

Gemäß Fig. 3 können bei einer anderen Ausführungsform der erfindungsgemäßen Vorrichtung 1 zwei Ringfilterelemente 15 und 15' koaxial zueinander im Gehäuse 2 angeordnet sein. Dabei ist das dem Gehäuseboden 16 zugewandte, also hier untere, Ringfilterelement 15 als Hauptstromfilter 49 ausgebildet, das zum Abtrennen relativ grober Verunreinigungen dient. Im Unterschied dazu ist das vom Gehäuseboden 16 abgewandte Ringfilterelement 15' als Nebenstromfilter 50 ausgebildet, das zum Abtrennen relativ feiner Verunreinigungen dient.

Bei der in Fig. 3 gezeigten speziellen Ausführungsform bilden das Hauptstromfilter 49 und das Nebenstromfilter 50 einen einheitlichen Ringfilterkörper 51, der eine scheibenförmige, axiale Abtrennung 52 zwischen den beiden Filtern 49 und 50 aufweist. Die Lagerung und Abdichtung der Filter 49 und 50 wird dadurch vereinfacht. Es ist klar, daß auch eine Ausführungsform mit zwei separaten Ringfilterelementen 15 und 15' möglich ist.

Bei der Ausführungsform gemäß Fig. 3 kommuniziert eine Reinseite 53 des Nebenstromfilters 50 durch die Verbindungsöffnung 45 mit dem Innenraum 46 des Rohrkörpers 19 und somit mit dem Rücklauf 8. Das bedeutet, daß in der Reinseite 53 der relativ niedrige Druck des Rücklaufs 8 herrscht. Dadurch herrscht am Nebenstromfilter 50 eine relativ große Druckdifferenz, welche die Filterwirkung des Nebenstromfilters 50 verbessert.

Durch eine geeignete Dimensionierung der Abtrennung 52 kann radial zwischen der Abtrennung 52 und dem Deckel 5 ein ringförmiger Drosselspalt 59 ausgebildet werden, der im Nennbetrieb der Vorrichtung 1 eine vorbestimmte Aufteilung der über den Zulauf 11 zugeführten Schmierölmenge in einen Hauptstrom und einen Nebenstrom ermöglicht.

Die Abtrennung 52 liegt radial innen dichtend am Funktionsträgerabschnitt 28 an, wobei entsprechende Dichtmittel 54 vorgesehen sind. Die Dichtmittel 54 sind dabei unterhalb des Verbindungskanals 39 angeordnet, wodurch dieser deaktiviert ist. Der Rohrkörper 19 ist über einen Stab 55 mit dem Deckel 5 verbunden, wobei der Stab 55 vorzugsweise in die Halterung 32 eingeclipst ist, die in der Ausführungsform gemäß den Fig. 1 und 2 zur Aufnahme des Radiallagers 31 dient. Ebenso kann der Stab 55 in die Aufnahme 38 des Funktionsträgerabschnitts 28 eingeclipst sein, die bei der Ausführungsform gemäß den Fig. 1 und 2 zur Aufnahme des Gleitlagers 37 dient.

Wesentliche Bestandteile der Vorrichtung 1, nämlich das Gehäuse 2 und der Rohrkörper 19 (im vorliegenden Beispiel außerdem der Deckel 5) sind bei den Varianten der Fig. 1 und 3 völlig identisch ausgebildet, wodurch sich - trotz Variantenbildung - eine relativ preiswerte Herstellung realisieren läßt.

Der Ringfilterkörper 51 ist lösbar am Rohrkörper 19 bzw. am Stab 55 angebracht; ebenso der Deckel 5. Dadurch bilden Dekkel 5, Ringfilterkörper 51 und Rohrkörper 19 sowie Stab 55 eine Einheit, die gemeinsam vom Gehäuse 2 entfernbar ist.

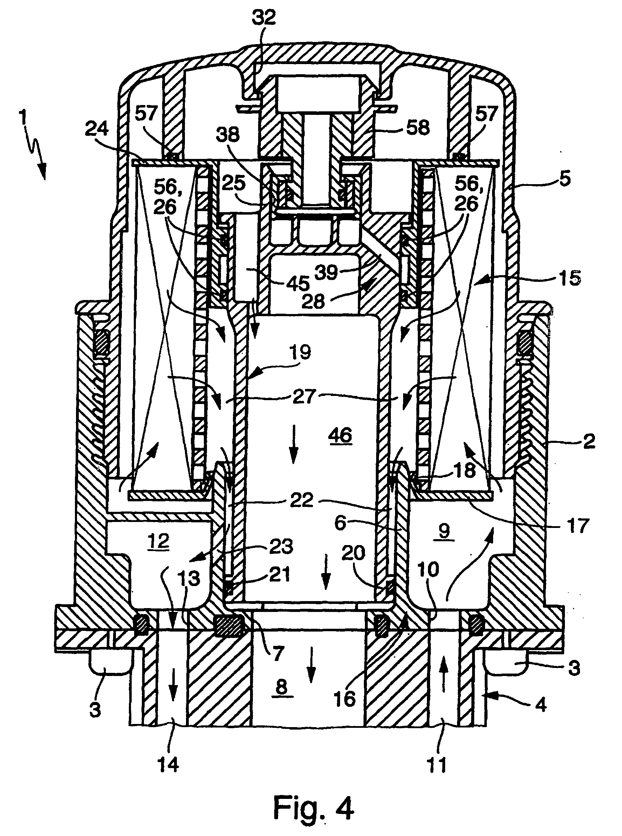

Entsprechend Fig. 4 kann bei einer weiteren Ausführungsform der erfindungsgemäßen Vorrichtung 1 auch nur ein einziges Ringfilterelement 15 im Gehäuse 2 untergebracht sein. Mit Hilfe entsprechender Verschlußmittel 56 und 57 können der Verbindungskanal 39 und die Verbindungsöffnung 45 dicht verschlossen werden, um so die ordnungsgemäße Funktion des einzigen Ringfilterelements 15 gewährleisten zu können. Durch diese Verschlußmittel 56 und 57 ist es möglich, auch bei dieser Ausführungsform gemäß Fig. 4 denselben Rohrkörper 19 zu verwenden, der auch in den Ausführungsformen der Fig. 1 und 3 zur Anwendung kommt. Dementsprechend kann auch diese zusätzliche Variante relativ preiswert hergestellt werden. Die Verschlußmittel 56 sind im vorliegenden Beispiel am Ringfilterelement 15 ausgebildet. Ebenso ist es möglich, andere Verschlußmittel zum Verschließen des Verbindungskanals 39 am Deckel 5 auszubilden. Die Verschlußmittel 57 sind im vorliegenden Beispiel durch eine axial wirkende Dichtung dargestellt. Ebenso ist es möglich, andere Dichtungsformen zu verwenden.

Bei der Ausführungsform gemäß Fig. 4 dient der Rohrkörper 19 als Verschluß für den durch den Rücklauf 8 gebildeten Leerlauf. Der über ein Kopplungsglied 58 mit dem Deckel 5 verbundene Rohrkörper 19 wird beim Abnehmen des Deckels 5 automatisch aus dem Stutzen 6 herausgezogen, wodurch der Rücklauf 8 vor dem endgültigen Abnehmen des Deckels 5 freigegeben wird, so daß sich das Gehäuse 2 zur Vereinfachung der Wartung entleert. Auch hier können Ringfilterelement 15, Rohrkörper 19 und Deckel 5 eine Einheit bilden, die gemeinsam vom Gehäuse 2 entfernbar ist. Ringfilterelement 15 und Deckel 5 sind vorzugsweise lösbar mit dem Rohrkörper 19 verbunden.

## Patentansprüche

1. Vorrichtung zum Abtrennen von Verunreinigungen aus einem Schmieröl einer Brennkraftmaschine, insbesondere eines Kraftfahrzeugs,
1.1 mit einem durch einen Deckel (5) verschließbaren Gehäuse (2), in dem mindestens ein Ringfilterelement (15) angeordnet ist,
1.2 mit einem am Gehäuseboden (16) ausgebildeten, zentrischen Stutzen (6), auf den das Ringfilterelement (15) einenends außen aufgesteckt ist,
1.3 mit einem rohseitigen Zulauf (11),
1.4 mit einem reinseitigen Ablauf (14),
1.5 mit einem relativ drucklosen Rücklauf (8),
1.6 wobei ein Rohrkörper (19) vorgesehen ist, der mit seinem, dem Gehäuseboden (16) zugewandten Ende (20) in den Stutzen (6) innen eingesteckt ist,
1.7 wobei radial zwischen dem Stutzen (6) und dem Rohrkörper (19) ein erster Ringraum (22) ausgebildet ist,
1.8 wobei der Stutzen (6) wenigstens einen radialen Durchbruch (23) aufweist, durch den der erste Ringraum (22) mit dem Ablauf (14) kommuniziert,
1.9 wobei das Ringfilterelement (15) anderenends auf einen vom Gehäuseboden (16) abgewandten Endabschnitt (25) des Rohrkörpers (19) außen aufgesteckt ist,
1.10 wobei radial zwischen Ringfilterelement (15) und Rohrkörper (19) ein zweiter Ringraum (27) ausgebildet ist, der mit dem ersten Ringraum (22) kommuniziert,
1.11 wobei ein Innenraum (46) des Rohrkörpers (19) durch eine zentrale Öffnung (7) des Stutzens (6) mit dem Rücklauf (8) kommuniziert,
1.12 wobei der Rohrköper (19) an seinem vom Gehäuseboden (16) abgewandten Ende als Funktionsträgerabschnitt (28) ausgebildet ist,der eine Verbindungsöffnung (45) sowie einen Verbindungskanal (39) aufweist,
1.13 wobei im Gehäuse (2) koaxial zum Ringfilterelement (15) eine Zentrifuge (29) untergebracht ist,
- der Funktionsträgerabschnitt (28) eine Ringscheibe (40) aufweist oder trägt, die im Gehäuse (2) einen Zentrifugenraum (44) axial von einem Filterraum (43) trennt,
- die Zentrifuge (29) im Zentrifugenraum (44) einenends am oder im Deckel (5) und anderenends am oder im Funktionsträgerabschnitt (28) gelagert ist,
- durch die Verbindungsöffnung (45) der Zentrifugenraum (44) mit dem Innenraum (46) des Rohrkörpers (19) kommuniziert,
- der Verbindungskanal (39) einen zentralen Einlaß (35) der Zentrifuge (29) mit dem Filterraum (43) auf der Rohseite des Ringfilterelements (15) verbindet.

2. Vorrichtung nach Anspruch 1,
**dadurch gekennzeichnet,**
**dass** die Ringscheibe (40) außen auf den Funktionsträgerabschnitt (28) des Rohrkörpers (19) aufgesteckt ist.

3. Vorrichtung nach Anspruch 1 oder 2,
**dadurch gekennzeichnet,**
**dass** der Verbindungskanal (39) eine Drosselstelle bildet oder aufweist.

4. Vorrichtung nach einem der Ansprüche 1 bis 3,
**dadurch gekennzeichnet,**
**dass** die Zentrifuge (29), das Ringfilterelement (15) und der Rohrkörper (19) lösbar miteinander verbunden sind und eine gemeinsam aus dem Gehäuse (2) entnehmbare Einheit bilden.

5. Vorrichtung nach Anspruch 4,
**dadurch gekennzeichnet,**
**dass** die Einheit zusätzlich die Ringscheibe (40) und/oder den Deckel (5) umfasst.

6. Vorrichtung nach einem der Ansprüche 1, 3 bis 5,
**dadurch gekennzeichnet,**
**dass** die Ringscheibe (40) einstückig am Funktionsträgerabschnitt (28) ausgebildet ist.

7. Vorrichtung zum Abtrennen von Verunreinigungen aus einem Schmieröl einer Brennkraftmaschine, insbesondere eines Kraftfahrzeugs,
7.1 mit einem durch einen Deckel (5) verschließbaren Gehäuse (2), in dem mindestens ein Ringfilterelement (15) angeordnet ist,
7.2 mit einem am Gehäuseboden (16) ausgebildeten, zentrischen Stutzen (6), auf den das Ringfilterelement (15) einenends außen aufgesteckt ist,
7.3 mit einem rohseitigen Zulauf (11),
7.4 mit einem reinseitigen Ablauf (14),
7.5 mit einem relativ drucklosen Rücklauf (8),
7.6 wobei ein Rohrkörper (19) vorgesehen ist, der mit seinem, dem Gehäuseboden (16) zugewandten Ende (20) in den Stutzen (6) innen eingesteckt ist,
7.7 wobei radial zwischen dem Stutzen (6) und dem Rohrkörper (19) ein erster Ringraum (22) ausgebildet ist,
7.8 wobei der Stutzen (6) wenigstens einen radialen Durchbruch (23) aufweist, durch den der erste Ringraum (22) mit dem Ablauf (14) kommuniziert,
7.9 wobei das Ringfilterelement (15) anderenends auf einen vom Gehäuseboden (16) abgewandten Endabschnitt (25) des Rohrkörpers (19) außen aufgesteckt ist,
7.10 wobei radial zwischen Ringfilterelement (15) und Rohrkörper (19) ein zweiter Ringraum (27) ausgebildet ist, der mit dem ersten Ringraum (22) kommuniziert,
7.11 wobei ein Innenraum (46) des Rohrkörpers (19) durch eine zentrale Öffnung (7) des Stutzens (6) mit dem Rücklauf (8) kommuniziert,
7.12 wobei der Rohrköper (19) an seinem vom Gehäuseboden (16) abgewandten Ende als Funktionsträgerabschnitt (28) ausgebildet ist,der eine Verbindungsöffnung (45) sowie einen Verbindungskanal (39) aufweist,
7.13 wobei im Gehäuse (2) zwei Ringfilterelemente (15,15') koaxial übereinander angeordnet sind,
- das gehäusebodennahe Ringfilterelement (15) als Hauptstromfilter (49) zum Abtrennen relativ grober Verunreinigungen ausgebildet ist,
- das gehäusebodenferne Ringfilterelement (15') als Nebenstromfilter (50) zum Abtrennen relativ feiner Verunreinigungen ausgebildet ist,
- die Reinseite (53) des Nebenstromfilters (50) durch die Verbindungsöffnung (45) mit dem Innenraum (46) des Rohrkörpers (19) kommuniziert.

8. Vorrichtung nach Anspruch 7,
**dadurch gekennzeichnet,**
**dass** die beiden Ringfilterelemente (15,15') zu einem einheitlichen Ringfilterkörper (51) zusammengefaßt sind, der eine axiale Abtrennung (52) zwischen den beiden Ringfilterelementen (15,15') aufweist.

9. Vorrichtung nach Anspruch 7 oder 8,
**dadurch gekennzeichnet,**
**dass** die beiden Ringfilterelemente (15,15') und der Rohrkörper (19) lösbar miteinander verbunden sind und eine gemeinsam aus dem Gehäuse (2) entnehmbare Einheit bilden.

10. Vorrichtung nach Anspruch 9,
**dadurch gekennzeichnet,**
**dass** die Einheit zusätzlich den Deckel (5) umfaßt.

11. Vorrichtung zum Abtrennen von Verunreinigungen aus einem Schmieröl einer Brennkraftmaschine, insbesondere eines Kraftfahrzeugs,
11.1 mit einem durch einen Deckel (5) verschließbaren Gehäuse (2), in dem mindestens ein Ringfilterelement (15) angeordnet ist,
11.2 mit einem am Gehäuseboden (16) ausgebildeten, zentrischen Stutzen (6), auf den das Ringfilterelement (15) einenends außen aufgesteckt ist,
11.3 mit einem rohseitigen Zulauf (11),
11.4 mit einem reinseitigen Ablauf (14),
11.5 mit einem relativ drucklosen Rücklauf (8),
11.6 wobei ein Rohrkörper (19) vorgesehen ist, der mit seinem, dem Gehäuseboden (16) zugewandten Ende (20) in den Stutzen (6) innen eingesteckt ist,
11.7 wobei radial zwischen dem Stutzen (6) und dem Rohrkörper (19) ein erster Ringraum (22) ausgebildet ist,
11.8 wobei der Stutzen (6) wenigstens einen radialen Durchbruch (23) aufweist, durch den der erste Ringraum (22) mit dem Ablauf (14) kommuniziert,
11.9 wobei das Ringfilterelement (15) anderenends auf einen vom Gehäuseboden (16) abgewandten Endabschnitt (25) des Rohrkörpers (19) außen aufgesteckt ist,
11.10 wobei radial zwischen Ringfilterelement (15) und Rohrkörper (19) ein zweiter Ringraum (27) ausgebildet ist, der mit dem ersten Ringraum (22) kommuniziert,
11.11 wobei ein Innenraum (46) des Rohrkörpers (19) durch eine zentrale Öffnung (7) des Stutzens (6) mit dem Rücklauf (8) kommuniziert,
11.12 wobei der Rohrköper (19) an seinem vom Gehäuseboden (16) abgewandten Ende als Funktionsträgerabschnitt (28) ausgebildet ist,der eine Verbindungsöffnung (45) sowie einen Verbindungskanal (39) aufweist,
11.13 wobei im Gehäuse (2) nur ein einziges Ringfilterelement (15) untergebracht ist,
- dass Verschlußmittel (56,57) vorgesehen sind, welche die Verbindungsöffnung (45) und/oder den Verbindungskanal (39) verschließen.

12. Vorrichtung nach Anspruch 11,
**dadurch gekennzeichnet,**
**dass** das Ringfilterelement (15) und der Rohrkörper. (19) lösbar miteinander verbunden sind und eine gemeinsam aus dem Gehäuse (2) entnehmbare Einheit bilden.

13. Vorrichtung nach Anspruch 12,
**dadurch gekennzeichnet,**
**dass** die Einheit zusätzlich den Deckel (5) umfaßt.

14. Vorrichtung nach einem der Ansprüche 1 bis 13,
**dadurch gekennzeichnet,**
**dass** der Rohrkörper (19) direkt oder indirekt mit dem Deckel (5) gekoppelt ist, derart, dass beim Abnehmen des Deckels (5) der Rohrkörper (19) aus dem Stutzen (6) herausgezogen wird.

15. Modulsystem mit dem eine Vorrichtung (1) nach einem der Ansprüche 1-5, nach einem der Ansprüche 7 bis 10 sowie nach einem der Ansprüche 11 bis 13 herstellbar ist, wobei der Rohrkörper (19) und/oder das Gehäuse (2) bei allen Ausführungsformen identisch ausgebildet sind.

## Claims

1. An apparatus for separating impurities from a lubricating oil of an internal combustion engine, in particular in a motor vehicle,
1.1 having a housing (2) which is closable by a cover (5) and in which at least one ring filter element (15) is situated,
1.2 having a central connection (6) which is provided on the housing bottom (16) and onto which the ring filter element (15) is placed from the outside at one end,
1.3 having an inlet (11) on the crude end,
1.4 having an outlet (14) on the clean end,
1.5 having a relatively pressureless return (8),
1.6 whereby a tubular body (19) is provided, its end (20) facing the housing bottom (16) being inserted into the connection (6) on the inside,
1.7 whereby a first annular space (22) is formed radially between the connection (6) and the tubular body (19),
1.8 whereby the connection (6) has at least one radial passage (23) through which the first annular space (22) communicates with the outlet (14),
1.9 whereby the ring filter element (15) is placed from the outside on an end section (25) of the tubular body (19) facing away from the housing bottom (16) at the other end,
1.10 whereby a second annular (27) space is formed radially between the ring filter element (15) and the tubular body (19), communicating with the first annular space (22),
1.11 whereby an interior space (46) of the tubular body (19) communicates with the return (8)through a central opening (7) in the connection (6),
1.12 whereby the tubular body (19) is designed as a function carrier section (28) on its end facing away from the housing bottom (16), said function carrier section having a connecting opening (45) and a connecting channel (39),
1.13 whereby a centrifuge (29) is accommodated in the housing (2) coaxially with the ring filter element (15),
- the function carrier section (28) has or carries a ring disk (40) the disk which separates a centrifuge space (44) in the housing (2) axially from a filter space (43),
- the centrifuge (29) is mounted in the centrifuge space (44) in or on the cover (5) at one end and in or on the function carrier section (28) on the other end,
- communicating through the connecting opening (45) of the centrifuge space (44) with the interior space (46) of the tubular body (19),
- the connecting channel (39) connects a central inlet (35) of the centrifuge (29) with the filter space (43) on the crude side of the ring filter element (15).

2. The apparatus according to claim 1,
**characterized in that**
the ring disk (40) is placed from the outside onto the function carrier section (28) of the tubular body (19).

3. The apparatus according to claim 1 or 2,
**characterized in that**
the connecting channel (39) forms a throttle means or has a throttle.

4. The apparatus according to one of claims 1 through 3,
**characterized in that**
the centrifuge (29), the ring filter element (15), and the tubular body (19) are detachably attached to one another and form a unit that is jointly removable from housing (2).

5. The apparatus according to claim 4,
**characterized in that**
the unit additionally includes the ring disk (40) and/or the cover (5).

6. The apparatus according to any one of claims 1, 3 through 5,
**characterized in that**
the ring disk (40) is designed in one piece on the function carrier section (28).

7. The apparatus for separating impurities from a lubricating oil of an internal combustion engine, in particular in a motor vehicle,
7.1 having a housing (2) which can be sealed by a cover (5) and in which at least one ring filter element (15) is situated,
7.2 having a central connection (6) provided on the housing bottom (16) with the ring filter element (15) placed on the connection on the outside at one end,
7.3 having an intake (11) on the crude end,
7.4 having an outlet (14) on the clean end,
7.5 having a relatively pressureless return (8),
7.6 whereby a tubular body (19) is provided, said body being inserted into the connection (6) on the inside at its end (20) facing the housing bottom (16),
7.7 a first annular space (22) being formed radially between the connection (6) and the tubular body (19),
7.8 whereby the connection (6) has at least one radial passage (23) through which the first annular space (22) communicates with the outlet (14),
7.9 whereby the ring filter element (15) is placed on the outside of the end section (25) of the tubular body (19) at the other end facing away from the housing bottom (16).
7.10 whereby a second annular space (27) is formed between the ring filter element (15) and the tubular body (19), this second annular space communicating with the first annular space (22),
7.11 whereby an interior space (46) of the tubular body (19) communicates with the return (8) through a central opening (7) in the connection (6).
7.12 whereby the tubular body (19) is designed as a function carrier section (28) on its end facing away from the housing bottom (16), said function carrier section having a connecting opening (45) and a connecting channel (39),
7.13 whereby two ring filter elements (15, 15') are arranged coaxially one above the other in the housing (2),
- the ring filter element (15) near the housing bottom is designed as the main flow filter (49) for separating relatively coarse impurities,
- the ring filter element (15') at a distance from the housing bottom is designed as the side-stream filter (50) for separating relatively fine impurities,
- the clean side (53) of the side-stream filter (50) communicates with the interior space (46) of the tubular body (19) through the connecting opening (45).

8. The apparatus according to claim 7,
**characterized in that**
the two ring filter elements (15, 15') are combined to form a uniform ring filter body (51) which has an axial separation (52) between the two ring filter elements (15, 15').

9. The apparatus according to claim 7 or 8,
**characterized in that**
the two ring filter elements (15, 15') and the tubular body (19) are detachably joined together and form a unit that can be removed as a whole from the housing (2).

10. The apparatus according to claim 9,
**characterized in that**
the unit additionally includes the cover (5).

11. The apparatus for separating impurities from a lubricating oil of an internal combustion engine, in particular in a motor vehicle,
11.1 having a housing (2) which can be closed by cover (5) and which has at least one ring filter element (15) arranged in it,
11.2 having a central connection (6) provided on the housing bottom (16) with the ring filter element (15) attached to it on the outside of one end,
11.3 having an inlet (11) on the crude side,
11.4 having an outlet (14) on the clean side,
11.5 having a relatively pressureless return (8),
11.6 whereby a tubular body (19) which is provided is inserted into the connection (6) on the inside at its end (20) facing the housing bottom (16),
11.7 whereby a first annular space (22) is formed radially between the connection (6) and the tubular body (19),
11.8 whereby the connection (6) has at least one radial passage (23) through which the first annular space (22) communicates with the outlet (14),
11.9 whereby the ring filter element (15) is attached to the outside of the end section (25) of the tubular body (19) facing away from the housing bottom (16) on the other end,
11.10 whereby a second annular space (27) is formed radially between the ring filter element (15) and the tubular body (19), said annular space communicating with the first annular space (22),
11.11 whereby an interior space (46) of the tubular body (19) communicates with the return (8) through a central opening (7) in the connection (6),
11.12 whereby the tubular body (19) is designed as a function carrier section (28) on its end facing away from the housing bottom (16), said function carrier section having a connecting opening (45) and a connecting channel (39),
11.13 whereby only a single ring filter element (15) is accommodated in the housing (2),
- closing means (56, 57) which close the connecting opening (45) and/or the connecting channel (39) are provided.

12. The apparatus according to claim 11,
**characterized in that**
the ring filter element (15) and the tubular body (19) are detachably joined together and form a unit that is removable as a whole from the housing (2).

13. The apparatus according to claim 12,
**characterized in that**
the unit additionally includes the cover (5).

14. The apparatus according to any one of Claims 1 through 13,
**characterized in that**
the tubular body (19) is connected directly or indirectly to the cover (5) in such a way that the tubular body (19) is removed from the connection (6) when the cover (5) is removed.

15. A modular system with which an apparatus (1) according to any one of claims 1 through 5, according to any one of Claims 7 through 10 and according to any one of Claims 11 through 13 can be produced, whereby the tubular body (19) and/or the housing (2) is designed to be identical in all the embodiments.

## Revendications

1. Dispositif de séparation d'impuretés d'une huile lubrifiante d'un moteur à combustion interne, en particulier d'un véhicule automobile, comprenant
1.1 un carter (2) qui peut être fermé par un couvercle (5) et dans lequel est disposé au moins un élément filtrant annulaire (15),
1.2 une tubulure centrale (6) réalisée sur le fond (16) du carter et sur laquelle est emmanché extérieurement, sur une extrémité, l'élément filtrant annulaire (15),
1.3 une arrivée côté brut (11),
1.4 une issue côté épuré (14),
1.5 un retour (8) relativement sans pression,
1.6 un corps tubulaire (19) étant prévu, lequel corps est emmanché intérieurement dans la tubulure (6) par son extrémité (20) tournée vers le fond (16) du carter,
1.7 un premier espace annulaire (22) étant réalisé dans la direction radiale entre la tubulure (6) et le corps tubulaire (19),
1.8 la tubulure (6) présentant au moins une percée radiale (23), par laquelle le premier espace annulaire (22) communique avec l'issue (14),
1.9 l'élément filtrant annulaire (15) étant emmanché extérieurement, sur l'autre extrémité, sur une section extrême (25) du corps tubulaire (19) opposée au fond (16) du carter,
1.10 un second espace annulaire (27), qui communique avec le premier espace annulaire (22), étant réalisé dans la direction radiale entre l'élément filtrant annulaire (15) et le corps tubulaire (19),
1.11 un espace intérieur (46) du corps tubulaire (19) communiquant par une ouverture centrale (7) de la tubulure (6) avec le retour (8),
1.12 le corps tubulaire (19) étant configuré sur son extrémité opposée au fond (16) du carter sous forme de section support fonctionnelle (28), qui présente une ouverture de jonction (45) ainsi qu'un canal de jonction (39),
1.13 un séparateur centrifuge (29) étant logé dans le carter (2) coaxialement à l'élément filtrant annulaire (15),
- la section support fonctionnelle (28) présentant ou supportant un disque annulaire (40) qui sépare dans le carter (2), dans la direction axiale, un espace de centrifugation (44) d'un espace de filtration (43),
- dans l'espace de centrifugation (44), le séparateur centrifuge (29) étant monté sur une extrémité sur ou dans le couvercle (5) et sur l'autre extrémité sur ou dans la section support fonctionnelle (28),
- l'espace de centrifugation (44) communiquant par l'ouverture de jonction (45) avec l'espace intérieur (46) du corps tubulaire (19),
- le canal de jonction (39) reliant une admission centrale (35) du séparateur centrifuge (29) à l'espace de filtration (43) sur le côté brut de l'élément filtrant annulaire (15).

2. Dispositif suivant la revendication 1, **caractérisé en ce que** le disque annulaire (40) est emmanché extérieurement sur la section support fonctionnelle (28) du corps tubulaire (19).

3. Dispositif suivant l'une des revendications 1 et 2, **caractérisé en ce que** le canal de jonction (39) forme ou présente un point d'étranglement.

4. Dispositif suivant l'une des revendications 1 à 3, **caractérisé en ce que** le séparateur centrifuge (29), l'élément filtrant annulaire (15) et le corps tubulaire (19) sont assemblés entre eux de façon amovible et forment conjointement une unité retirable du carter (2).

5. Dispositif suivant la revendication 4, **caractérisé en ce que** l'unité comprend en supplément le disque annulaire (40) et/ou le couvercle (5).

6. Dispositif suivant l'une des revendications 1, 3 à 5, **caractérisé en ce que** le disque annulaire (40) est réalisé d'une seule pièce sur la section support fonctionnelle (28).

7. Dispositif de séparation d'impuretés d'une huile lubrifiante d'un moteur à combustion interne, en particulier d'un véhicule automobile, comprenant
7.1 un carter (2) qui peut être fermé par un couvercle (5) et dans lequel est disposé au moins un élément filtrant annulaire (15),
7.2 une tubulure centrale (6) réalisée sur le fond (16) du carter et sur laquelle est emmanché extérieurement, sur une extrémité, l'élément filtrant annulaire (15),
7.3 une arrivée côté brut (11),
7.4 une issue côté épuré (14),
7.5 un retour (8) relativement sans pression,
7.6 un corps tubulaire (19) étant prévu, lequel corps est emmanché intérieurement dans la tubulure (6) par son extrémité (20) tournée vers le fond (16) du carter,
7.7 un premier espace annulaire (22) étant réalisé dans la direction radiale entre la tubulure (6) et le corps tubulaire (19),
7.8 la tubulure (6) présentant au moins une percée radiale (23), par laquelle le premier espace annulaire (22) communique avec l'issue (14),
7.9 l'élément filtrant annulaire (15) étant emmanché extérieurement, sur l'autre extrémité, sur une section extrême (25) du corps tubulaire (19) opposée au fond (16) du carter,
7.10 un second espace annulaire (27), qui communique avec le premier espace annulaire (22), étant réalisé dans la direction radiale entre l'élément filtrant annulaire (15) et le corps tubulaire (19),
7.11 un espace intérieur (46) du corps tubulaire (19) communiquant par une ouverture centrale (7) de la tubulure (6) avec le retour (8),
7.12 le corps tubulaire (19) étant réalisé sur son extrémité opposée au fond (16) du carter sous forme de section support fonctionnelle (28), qui présente une ouverture de jonction (45) ainsi qu'un canal de jonction (39),
7.13 deux éléments filtrants annulaires (15, 15') étant superposés coaxialement dans le carter (2),
- l'élément filtrant annulaire (15) proche du fond du carter étant réalisé sous forme de filtre en circuit principal (49) pour séparer des impuretés relativement grossières,
- l'élément filtrant annulaire (15') éloigné du fond du carter étant réalisé sous forme de filtre en dérivation (50) pour séparer des impuretés relativement fines,
- le côté épuré (53) du filtre en dérivation (50) communiquant par l'ouverture de jonction (45) avec l'espace intérieur (46) du corps tubulaire (19).

8. Dispositif suivant la revendication 7, **caractérisé en ce que** les deux éléments filtrants annulaires (15, 15') sont réunis en un corps filtrant annulaire (51) uniforme, qui présente une séparation axiale (52) entre les deux éléments filtrants annulaires (15, 15').

9. Dispositif suivant l'une des revendications 7 et 8, **caractérisé en ce que** les deux éléments filtrants annulaires (15, 15') et le corps tubulaire (19) sont assemblés entre eux de façon amovible et forment conjointement une unité retirable du carter (2).

10. Dispositif suivant la revendication 9, **caractérisé en ce que** l'unité comprend en supplément le couvercle (5).

11. Dispositif de séparation d'impuretés d'une huile lubrifiante d'un moteur à combustion interne, en particulier d'un véhicule automobile, comprenant
11.1 un carter (2) qui peut être fermé par un couvercle (5) et dans lequel est disposé au moins un élément filtrant annulaire (15),
11.2 une tubulure centrale (6) réalisée sur le fond (16) du carter et sur laquelle est emmanché extérieurement, sur une extrémité, l'élément filtrant annulaire (15),
11.3 une arrivée côté brut (11),
11.4 une issue côté épuré (14),
11.5 un retour (8) relativement sans pression,
11.6 un corps tubulaire (19) étant prévu, lequel corps est emmanché intérieurement dans la tubulure (6) par son extrémité (20) tournée vers le fond (16) du carter,
11.7 un premier espace annulaire (22) étant réalisé dans la direction radiale entre la tubulure (6) et le corps tubulaire (19),
11.8 la tubulure (6) présentant au moins une percée radiale (23), par laquelle le premier espace annulaire (22) communique avec l'issue (14),
11.9 l'élément filtrant annulaire (15) étant emmanché extérieurement, sur l'autre extrémité, sur une section extrême (25) du corps tubulaire (19) opposée au fond (16) du carter,
11.10 un second espace annulaire (22), qui communique avec le premier espace annulaire (22), étant réalisé dans la direction radiale entre l'élément filtrant annulaire (15) et le corps tubulaire (19),
11.11 un espace intérieur (46) du corps tubulaire (19) communiquant par une ouverture centrale (7) de la tubulure (6) avec le retour (8),
11.12 le corps tubulaire (19) étant réalisé sur son extrémité opposée au fond (16) du carter sous forme de section support fonctionnelle (28), qui présente une ouverture de jonction (45) ainsi qu'un canal de jonction (39),
11.13 un élément filtrant annulaire (15) unique étant logé dans le carter (2),
- des moyens de fermeture (56, 57) étant prévus, lesquels ferment l'ouverture de jonction (45) et/ou le canal de jonction (39).

12. Dispositif suivant la revendication 11, **caractérisé en ce que** l'élément filtrant annulaire (15) et le corps tubulaire (19) sont assemblés entre eux de façon amovible et forment conjointement une unité retirable du carter (2).

13. Dispositif suivant la revendication 12, **caractérisé en ce que** l'unité comprend en supplément le couvercle (5).

14. Dispositif suivant l'une des revendications 1 à 13, **caractérisé en ce que** le corps tubulaire (19) est accouplé directement ou indirectement avec le couvercle (5) de telle sorte que, lors du retrait du couvercle (5), le corps tubulaire (19) est retiré de la tubulure (6).

15. Système modulaire avec lequel peut être fabriqué un dispositif (1) suivant l'une des revendications 1 à 5, suivant l'une des revendications 7 à 10 ainsi que suivant l'une des revendications 11 à 13, le corps tubulaire (19) et/ou le carter (2) ayant une configuration identique dans toutes les formes de construction.
